# EUROPÄISCHE PATENTANMELDUNG

(11) **EP 4 485 754 A1**
(43) Veröffentlichungstag der Anmeldung: **01.01.2025**
(21) Anmeldenummer: 23181709.9
(22) Anmeldetag: 27.06.2023
(51) Int. Cl.: H02K 1/2795

(54) **PERMANENTMAGNETANORDNUNG, AXIALFLUSSMASCHINE UND ELEKTROMECHANISCHER ANTRIEB**

(71) Anmelder: dormakaba Deutschland GmbH, 58256 Ennepetal (DE)
(72) Erfinder: Busch, Sven, 44227 Dortmund (DE); Mertens, Tim, 42113 Wuppertal (DE); vom Brocke, Jan Eric, 58256 Ennepetal (DE)
(74) Vertreter: Balder IP Law, S.L.

(57) **Zusammenfassung**

Die Erfindung betrifft eine Permanentmagnetanordnung (1) zur Verwendung als Rotor oder Stator einer Axialflussmaschine (10), insbesondere einer Axialflussmaschine (10) eines Türantriebs. Die Permanentmagnetanordnung (1) weist mehrere um eine Mittelachse (2) ringförmig angeordnete und jeweils in einer parallel zu der Mittelachse (2) verlaufenden axialen Richtung magnetisierte Permanentmagnete (3) auf. Benachbart zueinander angeordnete Permanentmagnete (3) weisen jeweils eine entgegengesetzte Polarisierung auf. Sämtliche Permanentmagneten (3) sind einstückig miteinander ausgestaltet und bilden einen mehrpolpaarigen Ringmagneten.

## Beschreibung

Die Erfindung betrifft eine Permanentmagnetanordnung zur Verwendung als Rotor oder Stator einer Axialflussmaschine, insbesondere einer Axialflussmaschine eines Türantriebs, wobei die Permanentmagnetanordnung mehrere um eine Mittelachse ringförmig angeordnete und jeweils in einer parallel zu der Mittelachse verlaufenden axialen Richtung magnetisierte Permanentmagnete aufweist und wobei benachbart zueinander angeordnete Permanentmagnete jeweils eine entgegengesetzte Polarisierung aufweisen. Die Erfindung betrifft auch eine Axialflussmaschine mit einer Spulenanordnung und einer Permanentmagnetanordnung sowie einen elektromechanischen Antrieb.

Die Verwendung von Axialflussmaschinen und insbesondere von bürstenlosen Axialflussmaschinen für Türantriebe ist aus dem Stand der Technik bekannt und wird beispielsweise in der Druckschrift EP 3 974 610 A1 beschrieben. Bei derartigen Axialflussmaschinen verläuft der magnetische Fluss durch die Permanentmagnetanordnung und die Spulenanordnung axial zur Drehachse des Motors, die die Maschinenachse bildet. Die Permanentmagnetanordnung bildet einen Teil eines Stators der Axialflussmaschine und die Spulenanordnung bildet einen Teil eines Rotors der Axialflussmaschine oder die Permanentmagnetanordnung bildet einen Teil des Rotors der Axialflussmaschine und die Spulenanordnung bildet einen Teil des Stators der Axialflussmaschine. Die Permanentmagneten der Permanentmagnetanordnung und Spulen der Spulenanordnung sind dabei üblicherweise ringförmig um die Maschinenachse herum angeordnet. Die Permanentmagneten sind so ausgerichtet, dass einer der Pole jedes Permanentmagneten näher zu der Spulenanordnung liegt als der andere Pol, sodass innerhalb des jeweiligen Permanentmagneten zwischen dem Nordpol und dem Südpol verlaufende magnetische Feldlinien parallel zu der Maschinenachse verlaufen. Die Permanentmagneten weisen üblicherweise eine näherungsweise trapezförmige Grundfläche auf, wobei Abmessungen der Grundfläche ein Vielfaches einer Höhe des jeweiligen Permanentmagneten aufweisen. Geraden durch Seitenkanten der Grundfläche verlaufen dabei üblicherweise durch einen Punkt der Drehachse bzw. der Maschinenachse, sodass eine Innenkante der Grundfläche kürzer ist als eine Außenkante der Grundfläche. Die Permanentmagnete weisen dadurch eine Form eines näherungsweise trapezförmigen Prismas auf. Häufig sind die Innenkante und die Außenkante auch kreisabschnittsförmig ausgebildet, sodass die Grundfläche ein Ringsegment bildet.

Zur Herstellung der aus dem Stand der Technik bekannten Permanentmagnetanordnungen werden üblicherweise einzelne Permanentmagnete der Permanentmagnetanordnung auf einer Trägerplatte ausgerichtet und beispielsweise klebend auf der Trägerplatte befestigt. Eine Höhe der Permanentmagnetanordnung entspricht dabei einer Höhe der Trägerplatte zuzüglich einer Höhe der Permanentmagnete.

Als Aufgabe der Erfindung wird es angesehen, die aus dem Stand der Technik bekannten Permanentmagnetanordnungen zu verbessern.

Diese Aufgabe wird erfindungsgemäß dadurch gelöst, dass mindestens zwei benachbart zueinander angeordnete Permanentmagnete einstückig ausgestaltet sind. Auf diese Weise kann der Aufwand bei der Herstellung der Permanentmagnetanordnungen reduziert werden, da weniger einzelne Permanentmagnete auf die Trägerplatte aufgebracht werden müssen. Dabei können mehrere Permanentmagnete dadurch einstückig ausgestaltet werden, dass zur Herstellung ein pulvermetallurgisches Verfahren verwendet wird, wobei beim Pressen des pulverförmigen Ausgangsmaterials gleichzeitig ein schwaches magnetisches Feld angelegt wird, wodurch eine Vorzugspolarisierung vorgegeben wird, die üblicherweise radial oder axial definiert wird. Anschließend werden die so hergestellten Rohlinge in einer Magnetisierungsvorrichtung durch starke magnetische Felder unterschiedlicher bzw. entgegengesetzter Polarisierung in benachbart zueinander angeordneten Bereichen des Rohlings magnetisiert. Diese unterschiedliche Polarisierung wird von den Pulverpartikeln des Ausgangsmaterials nachvollzogen und in dem so hergestellten Magnetmaterial eingefroren bzw. gespeichert.

Um den Herstellungsaufwand für die Permanentmagnetanordnung weiter zu reduzieren ist erfindungsgemäß vorgesehen, dass sämtliche Permanentmagneten einstückig miteinander ausgestaltet sind und einen mehrpolpaarigen Ringmagneten bilden. Die Ausgestaltung als mehrpolpaariger Ringmagnet bietet bei der erfindungsgemäßen Verwendung als Permanentmagnetanordnung für einen Stator oder Rotor einer Axialflussmaschine den zusätzlichen Vorteil, dass gegebenenfalls auf die Trägerplatte verzichtet werden kann, sodass ein geringerer Bauraum für den Stator oder Rotor erforderlich ist. Zudem kann die Permanentmagnetanordnung bei dieser Ausgestaltung erfindungsgemäß vorteilhafterweise durchgehend ebene Oberflächen bzw. Seitenflächen aufweisen, wodurch beispielsweise bei Verwendung als Rotor ein gleichmäßigerer Lauf erreicht wird. Bei der Ausgestaltung mit durchgehend ebenen Oberflächen sind die einzelnen Permanentmagneten nicht mehr optisch voneinander zu unterscheiden. Daher werden im Sinne dieser Erfindung die verschiedenen Permanentmagneten der Permanentmagnetanordnung dadurch voneinander abgegrenzt, dass sich zwischen zwei benachbart angeordneten Permanentmagneten die Richtung der von der Permanentmagnetanordnung erzeugten magnetischen Flussdichte umkehrt. Eine Form der Permanentmagnete wird dabei durch die innerhalb des Ringmagneten durch den Permanentmagneten erzeugte und zu den Seiten des jeweiligen Permanentmagneten auf null abfallende magnetische Flussdichte bestimmt, wobei die Seitenflächen des Permanentmagneten durch diesen Abfall auf null vorgegeben sind. Die Ober- und Unterseite der jeweiligen Permanentmagneten wird durch die Oberseite und die Unterseite des Ringmagneten bestimmt.

Vorteilhafterweise ist erfindungsgemäß vorgesehen, dass jeweils zwischen zwei benachbart zueinander angeordneten Permanentmagneten ein unmagnetisierter Bereich vorgesehen ist, wobei der unmagnetisierte Bereich einstückig mit den Permanentmagneten ausgestaltet ist. Auf diese Weise kann der Herstellungsprozess der einstückig hergestellten Permanentmagnete vereinfacht werden, da die beim Magnetisieren angelegten äußeren Magnetfelder nicht unmittelbar aneinander angrenzend an das Ausgangsmaterial angelegt werden müssen.

Bei einer besonders vorteilhaften Ausgestaltung der erfindungsgemäßen Permanentmagnetanordnung ist vorgesehen, dass eine Grundfläche der Permanentmagnete schräg zueinander verlaufende Permanentmagnetkanten aufweist. Auf diese Weise kann insbesondere bei einer ringförmigen Ausgestaltung der Permanentmagnetanordnung das zur Verfügung stehende magnetisierbare Ausgangsmaterial weitestgehend magnetisiert werden, sodass auf möglichst kleiner Fläche eine vergleichsweise große magnetische Flussdichte bereitgestellt werden kann. Eine Grundfläche der Permanentmagnete kann dabei beispielsweise näherungsweise trapezförmig ausgestaltet sein, wobei die Innenseiten und Außenseiten der Permanentmagnete gekrümmt ausgestaltet sind und der Ringform der Permanentmagnetanordnung folgen. Dabei werden die Permanentmagnetkanten wie oben bereits ausgeführt durch die innerhalb des Ringmagneten durch den Permanentmagneten erzeugte und zu den Seiten des jeweiligen Permanentmagneten auf null abfallende magnetische Flussdichte bestimmt, wobei die Seitenflächen des Permanentmagneten bzw. die Permanentmagnetkanten durch diesen Abfall auf null vorgegeben sind.

Vorteilhafterweise ist erfindungsgemäß vorgesehen, dass die Permanentmagnetkanten eine kontinuierlich von einer der Mittelachse zugewandten Innenseite zu einer der Mittelachse abgewandten Außenseite ansteigende Krümmung aufweisen. Es ist bekannt, dass beim Betrieb von Axialflussmaschinen sogenannte Rastkräfte oder Rastmomente auftreten, die im Betrieb zu einer erhöhten Geräuschentwicklung und Vibration führen und den Gesamtwirkungsgrad der Maschine senken. Die Rastkräfte sind magnetische Störkräfte und entstehen durch Wechselwirkungen zwischen den Permanentmagneten und Spulenkernen bzw. Statorzähnen, die aus Eisen oder einem anderen Material mit guter magnetischer Leitfähigkeit bestehen. Um diese Rastkräfte zu reduzieren sind aus dem Stand der Technik unterschiedliche Maßnahmen bekannt.

Eine dieser Maßnahmen ist die sogenannte "Schrägung der Magnetkanten" der Permanentmagnete. Bei dieser Maßnahme werden die Permanentmagnete ausgehend von der näherungsweise trapezförmigen Grundfläche so angepasst, dass die Geraden durch die Seitenkanten nicht mehr durch die Drehachse verlaufen oder dass von der Trapezform abweichende Formgebungen mit beispielsweise geknickt verlaufenden Seitenkanten gewählt werden. Eine aus dem Stand der Technik bekannte Möglichkeit zur Schrägung der Magnetkanten besteht darin, die Permanentmagneten ausgehend von der trapezförmigen Grundfläche so anzupassen, dass die Seitenkanten um einen sogenannten Schrägungswinkel gegen die durch die Drehachse verlaufenden Geraden verkippt werden. Die Seitenkanten der Permanentmagneten weisen dabei für jeden Verbindungspunkt auf der jeweiligen Seitenkante oder zumindest für jeden Verbindungspunkt auf Abschnitten der Seitenkanten bei geknicktem Verlauf der Seitenkante den gleichen Verschiebungswinkel auf. Dieser wird auch Schrägungswinkel genannt.

Bei Untersuchungen mit herkömmlichen Permanentmagneten mit näherungsweise trapezförmiger Grundfläche mit kreisabschnittsförmig ausgebildeter Innen- und Außenkante hat sich herausgestellt, dass ein Beitrag einzelner Abschnitte der Permanentmagneten zu den durch diese Permanentmagneten erzeugten Rastkräfte abhängig vom Abstand des jeweiligen Abschnitts von einer Maschinenachse bzw. Mittelachse der Axialflussmaschine ist. Durch die erfindungsgemäße Ausgestaltung der Permanentmagnetkanten wird diese Erkenntnis ausgenutzt, um die Rastkräfte weiter zu verringern. Dazu wird anstelle der Ausgestaltung mit einem konstanten Verschiebungs- bzw. Schrägungswinkel die Grundfläche des Permanentmagneten bzw. die Permanentmagnetkanten so ausgestaltet, dass die gegenüberliegenden Seitenflächen einen kontinuierlich ansteigenden bzw. abfallenden Schrägungswinkel aufweisen, wobei die Schrägungswinkel größer bzw. kleiner sind, je größer der Abstand des jeweiligen Abschnitts des Permanentmagneten von der Maschinenachse ist und wobei der jeweilige Schrägungswinkel in Abhängigkeit dieses Abstands überproportional zunimmt bzw. abnimmt.

Vorteilhafterweise ist erfindungsgemäß vorgesehen, dass die Permanentmagnetanordnung aus einem seltenen Erdmaterial hergestellt ist. Vorteilhafterweise kann es sich bei dem verwendeten Material beispielsweise um Neodym-Eisen-Bor oder Samarium-Cobalt handeln.

Zum Schutz der Permanentmagnetanordnung im Betrieb der Axialflussmaschine ist erfindungsgemäß vorgesehen, dass die Permanentmagnetanordnung eine Beschichtung zum Schutz der Permanentmagneten aufweist. Die Beschichtung kann vorteilhafterweise beispielsweise eine Nickel-Kupfer-Nickel-Beschichtung sein. Erfindungsgemäß ist diese Beschichtung nur wenige Mikrometer dick und vorteilhafterweise weniger als 12 Mikrometer dick.

Um die Laufeigenschaften der Axialflussmaschine bei der Verwendung der erfindungsgemäßen Permanentmagnetanordnung zu verbessern ist erfindungsgemäß vorgesehen, dass die Permanentmagnetanordnung acht Permanentmagnete, vorteilhafterweise zwölf Permanentmagnete und besonders vorteilhafterweise sechzehn Permanentmagnete aufweist.

Vorteilhafterweise ist erfindungsgemäß vorgesehen, dass ein Verhältnis eines Durchmessers der Permanentmagnetanordnung zu einer Dicke der Permanentmagnetanordnung in der axialen Richtung mindestens zwanzig, vorteilhafterweise mindestens dreißig und besonders vorteilhafterweise mindestens sechsunddreißig beträgt. Durch eine derartige Ausgestaltung kann die Permanentmagnetanordnung besonders flach ausgeführt werden, sodass der für die Anordnung der Permanentmagnetanordnung in der Axialflussmaschine erforderliche Bauraum reduziert werden kann. Vorteilhafterweise ist bei einer Permanentmagnetanordnung mit einem Durchmesser von 40 bis 120 mm eine Dicke von <1,1 bis 6 mm vorgesehen.

Die Erfindung betrifft auch eine Axialflussmaschine mit einer Spulenanordnung und einer wie vorangehend beschriebenen Permanentmagnetanordnung, wobei die Spulenanordnung mehrere benachbart zueinander ringförmig um die Maschinenachse angeordnete elektrische Maschinenspulen aufweist, wobei die Spulenanordnung axial verschoben benachbart zu der Permanentmagnetanordnung angeordnet ist. Vorteilhafterweise handelt es sich bei der Axialflussmaschine um eine bürstenlose Axialflussmaschine. Derartige Axialflussmaschinen eignen sich besonders gut für die Verwendung mit Tür- oder Fensterantrieben

Vorteilhafterweise ist erfindungsgemäß vorgesehen, dass der Innenringumfang und der Außenringumfang der Permanentmagnetanordnung im Wesentlichen korrespondierenden Ringumfängen der Spulenanordnung entsprechen. Auf diese Weise kann ein besonders kompakter Aufbau der Axialflussmaschine erreicht werden.

Die Erfindung betrifft auch einen elektromechanischen Antrieb zum Betätigen eines drehbar und/oder verschiebbar an einem Strukturelement gelagerten Flügels, insbesondere eines Türflügels oder eines Fensterflügels mit einer wie voranstehend beschriebenen Axialflussmaschine

Vorteilhafterweise ist erfindungsgemäß vorgesehen, dass es sich bei dem elektromechanischen Antrieb um einen Schwenktürflügel- oder Schiebetür- oder Karusselltürantrieb handelt.

Weitere vorteilhafte Ausgestaltungen des erfindungsgemäßen Verfahrens und des erfindungsgemäßen elektromechanischen Antriebs werden anhand von in der Zeichnung dargestellten Ausführungsbeispielen näher erläutert.

Es zeigt:
Figuren 1a und 1b schematisch dargestellte Ansichten einer erfindungsgemäßen Permanentmagnetanordnung und
Figur 2 eine schematisch dargestellte Schnittansicht eines elektromechanischen Antriebs, bei dem die erfindungsgemäße Permanentmagnetanordnung verwendet ist.

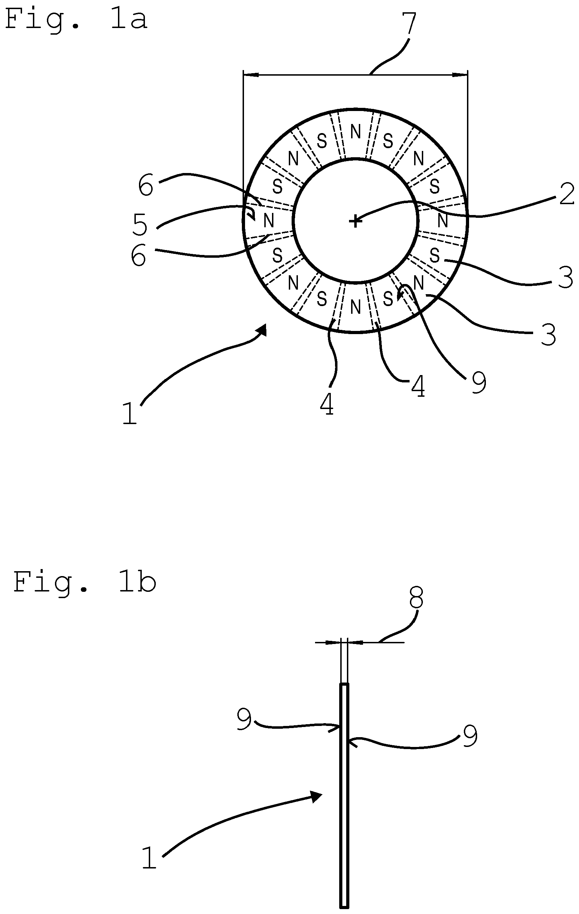

Figur 1a zeigt eine schematisch dargestellte Draufsicht und Figur 1b eine schematisch dargestellte Seitenansicht einer Permanentmagnetanordnung 1 zur Verwendung als Rotor oder Stator einer Axialflussmaschine. Die Permanentmagnetanordnung 1 weist mehrere um eine Mittelachse 2 ringförmig angeordnete und jeweils in einer parallel zu der Mittelachse 2 verlaufenden axialen Richtung magnetisierte Permanentmagnete 3 auf. Jeweils zwischen zwei benachbart zueinander angeordneten Permanentmagneten 3 ist ein unmagnetisierter Bereich 4 vorgesehen, wobei der unmagnetisierte Bereich 4 einstückig mit den Permanentmagneten 3 ausgestaltet ist. In der Zeichnung sind exemplarisch zwei Permanentmagnete 3 und zwei unmagnetisierte Bereiche 4 mit einem Bezugszeichen gekennzeichnet.

Benachbart zueinander angeordnete Permanentmagnete 3 weisen jeweils eine entgegengesetzte Polarisierung auf. Dies ist in Figur 1a durch die Buchstaben "N" für magnetischer Nordpol und "S" für magnetischer Südpol gekennzeichnet. Sämtliche Permanentmagneten 3 sind einstückig miteinander ausgestaltet und bilden so einen mehrpolpaarigen Ringmagneten.

Eine Grundfläche 5 der Permanentmagneten 3 weist schräg zueinander verlaufende Permanentmagnetkanten 6 auf. In der Zeichnung sind exemplarisch eine Grundfläche 5 mit zwei Permanentmagnetkanten 6 mit einem Bezugszeichen gekennzeichnet.

Ein Durchmesser 7 der Permanentmagnetanordnung 1 beträgt zwischen 40 und 120mm. Eine Dicke 8 der Permanentmagnetanordnung 1 in der axialen Richtung liegt zwischen <1,1 bis 6 mm. Das Verhältnis zwischen Durchmesser 7 und Dicke 8 beträgt etwa sechsunddreißig. Die Permanentmagnetanordnung 1 weist zudem durchgehend ebene Oberflächen 9 auf.

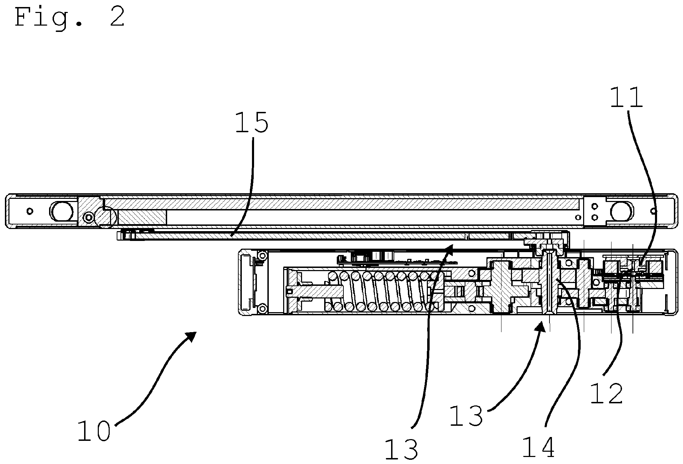

In Figur 2 ist schematisch eine Schnittansicht eines elektromechanischen Antriebs 10 zum Betätigen eines drehbar und/oder verschiebbar an einem Strukturelement gelagerten Flügels, insbesondere eines Türflügels oder eines Fensterflügels dargestellt. Der elektromechanische Antrieb 10 weist eine Axialflussmaschine 11 auf, die eine nicht dargestellten erfindungsgemäße Permanentmagnetanordnung als Rotor aufweist. Eine Antriebswelle 12 der Axialflussmaschine 11 steht über eine Kraftübertragungseinrichtung 13 mit dem nicht dargestellten Flügel in Wirkverbindung. Die Kraftübertragungsvorrichtung 13 besteht im Wesentlichen aus einem mit der Axialflussmaschine 11 verbundenen Getriebe 14 und einem Hebel 15. Hierüber wird eine Bewegung der Antriebswelle 12 in eine Bewegung des Flügels umgesetzt.

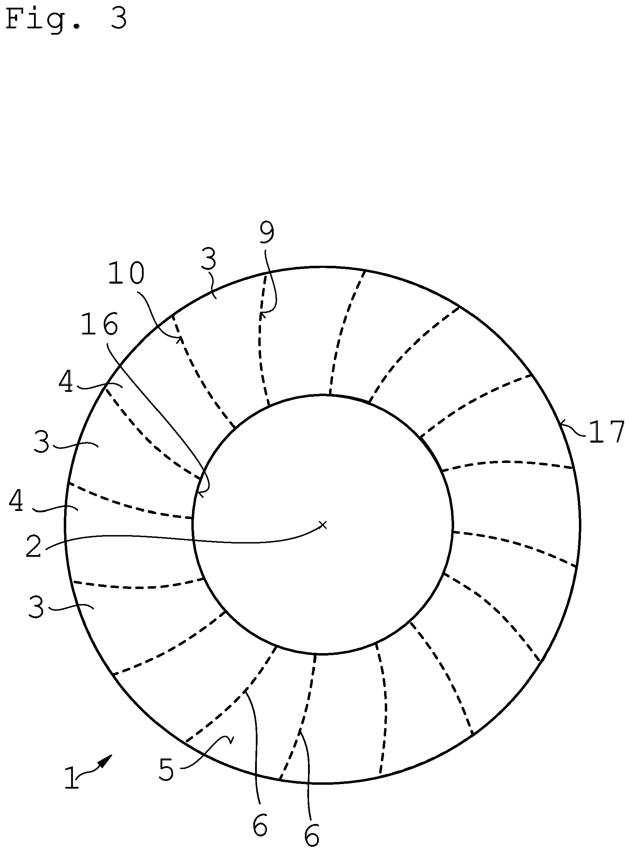

Figur 3 zeigt eine schematisch dargestellte Draufsicht einer Permanentmagnetanordnung 1 zur Verwendung als Rotor oder Stator einer Axialflussmaschine. Die Permanentmagnetanordnung 1 weist mehrere um eine Mittelachse 2 ringförmig angeordnete und jeweils in einer parallel zu der Mittelachse 2 verlaufenden axialen Richtung magnetisierte Permanentmagnete 3 auf. Jeweils zwischen zwei benachbart zueinander angeordneten Permanentmagneten 3 ist ein unmagnetisierter Bereich 4 vorgesehen ist, wobei der unmagnetisierte Bereich 4 einstückig mit den Permanentmagneten 3 ausgestaltet ist. In der Zeichnung sind exemplarisch drei Permanentmagnete 3 und zwei unmagnetisierte Bereiche 4 mit einem Bezugszeichen gekennzeichnet.

Benachbart zueinander angeordnete Permanentmagnete 3 weisen jeweils eine entgegengesetzte Polarisierung auf. Sämtliche Permanentmagneten 3 sind einstückig miteinander ausgestaltet und bilden so einen mehrpolpaarigen Ringmagneten.

Eine Grundfläche 5 der Permanentmagneten 3 weist schräg zueinander verlaufende Permanentmagnetkanten 6 auf, wobei die Permanentmagnetkanten 6 eine kontinuierlich von einer der Mittelachse 2 zugewandten Innenseite 16 zu einer der Mittelachse 2 abgewandten Außenseite 17 ansteigende Krümmung aufweisen. In der Zeichnung sind exemplarisch eine Grundfläche 5 mit zwei Permanentmagnetkanten 6 mit einem Bezugszeichen gekennzeichnet.

## Patentansprüche

**1.** Permanentmagnetanordnung (1) zur Verwendung als Rotor oder Stator einer Axialflussmaschine (10), insbesondere einer Axialflussmaschine (10) eines Türantriebs, wobei die Permanentmagnetanordnung (1) mehrere um eine Mittelachse (2) ringförmig angeordnete und jeweils in einer parallel zu der Mittelachse (2) verlaufenden axialen Richtung magnetisierte Permanentmagnete (3) aufweist und wobei benachbart zueinander angeordnete Permanentmagnete (3) jeweils eine entgegengesetzte Polarisierung aufweisen, **dadurch gekennzeichnet, dass** mindestens zwei benachbart zueinander angeordnete Permanentmagnete (3) einstückig ausgestaltet sind.

**2.** Permanentmagnetanordnung (1) gemäß Anspruch 1, **dadurch gekennzeichnet, dass** sämtliche Permanentmagneten (3) einstückig miteinander ausgestaltet sind und einen mehrpolpaarigen Ringmagneten bilden.

**3.** Permanentmagnetanordnung (1) gemäß Anspruch 1 oder Anspruch 2, **dadurch gekennzeichnet, dass** jeweils zwischen zwei benachbart zueinander angeordneten Permanentmagneten (3) ein unmagnetisierter Bereich (4) vorgesehen ist, wobei der unmagnetisierte Bereich (4) einstückig mit den Permanentmagneten (3) ausgestaltet ist.

**4.** Permanentmagnetanordnung (1) gemäß einem der voranstehenden Ansprüche, **dadurch gekennzeichnet, dass** eine Grundfläche (5) der Permanentmagnete (3) schräg zueinander verlaufende Permanentmagnetkanten (6) aufweist.

**5.** Permanentmagnetanordnung (1) gemäß Anspruch 4, **dadurch gekennzeichnet, dass** die Permanentmagnetkanten (6) eine kontinuierlich von einer der Mittelachse (2) zugewandten Innenseite (16) zu einer der Mittelachse (2) abgewandten Außenseite (17) ansteigende Krümmung aufweisen.

**7.** Permanentmagnetanordnung (1) gemäß einem der voranstehenden Ansprüche, **dadurch gekennzeichnet, dass** die Permanentmagnetanordnung (1) aus einem seltenen Erdmaterial hergestellt ist.

**8.** Permanentmagnetanordnung (1) gemäß einem der voranstehenden Ansprüche, **dadurch gekennzeichnet, dass** die Permanentmagnetanordnung (1) eine Beschichtung zum Schutz der Permanentmagneten (3) aufweist.

**9.** Permanentmagnetanordnung (1) gemäß einem der voranstehenden Ansprüche, **dadurch gekennzeichnet, dass** die Permanentmagnetanordnung (1) acht Permanentmagnete (3), vorteilhafterweise zwölf Permanentmagnete (3) und besonders vorteilhafterweise sechzehn Permanentmagnete (3) aufweist.

**10.** Permanentmagnetanordnung (1) gemäß einem der voranstehenden Ansprüche, **dadurch gekennzeichnet, dass** ein Verhältnis eines Durchmessers (7) der Permanentmagnetanordnung (1) zu einer Dicke (8) der Permanentmagnetanordnung (1) in der axialen Richtung mindestens zwanzig, vorteilhafterweise mindestens dreißig und besonders vorteilhafterweise mindestens sechsunddreißig beträgt.

**11.** Axialflussmaschine (10) mit einer Spulenanordnung und einer Permanentmagnetanordnung (1) gemäß einem der voranstehenden Ansprüche, wobei die Spulenanordnung mehrere benachbart zueinander ringförmig um die Maschinenachse angeordnete elektrische Maschinenspulen aufweist, wobei die Spulenanordnung axial verschoben benachbart zu der Permanentmagnetanordnung (1) angeordnet ist.

**12.** Elektromechanischer Antrieb zum Betätigen eines drehbar und/oder verschiebbar an einem Strukturelement gelagerten Flügels, insbesondere eines Türflügels oder eines Fensterflügels mit einer Axialflussmaschine (10) gemäß Anspruch 11.

**13.** Elektromechanischer Antrieb gemäß Anspruch 12, **dadurch gekennzeichnet, dass** es sich bei dem elektromechanischen Antrieb um einen Schwenktürflügel- oder Schiebetür- oder Karusselltürantrieb handelt.
